Europäisches Patentamt

European Patent Office

Office européen des brevets

(11) Numéro de publication: **0 409 319 A1**

## DEMANDE DE BREVET EUROPEEN

(21) Numéro de dépôt: 90201879.5

(22) Date de dépôt: 11.07.90

(51) Int. Cl.5: **C01B 13/32**, C01G 25/02, C04B 35/48

(30) Priorité: 20.07.89 BE 8900797

(43) Date de publication de la demande:
23.01.91 Bulletin 91/04

(84) Etats contractants désignés:
AT BE CH DE DK ES FR GB GR IT LI LU NL SE

(71) Demandeur: SOLVAY & Cie (Société Anonyme)me)
Rue du Prince Albert, 33
B-1050 Bruxelles(BE)

(72) Inventeur: Lerot, Luc
Avenue du Centaure, 31
B-1200 Bruxelles(BE)
Inventeur: Legrand, Franz
Rue des Vaches, 71
B-7300 Quaregnon(BE)
Inventeur: Bourjot, Joel
Avenue des Croix de Guerre, 353
B-1120 Bruxelles(BE)

(74) Mandataire: Anthoine, Paul et al
SOLVAY & Cie Département de la Propriété
Industrielle 310, rue de Ransbeekeek
·B-1120 Bruxelles(BE)

(54) **Procédé de fabrication d'un composite d'oxydes métalliques, poudres composites d'oxydes métalliques et matériaux céramiques.**

(57) Procédé de fabrication d'un composite d'oxydes métalliques, selon lequel on hydrolyse un alcoolate métallique en présence de particules d'(hydr)oxyde métallique, pour convertir l'alcoolate métallique en un gel d'(hydr)oxyde métallique enveloppant les particules d'(hydr)oxyde métallique. Poudres d'un composite d'oxydes métalliques obtenues par ce procédé et matériaux céramiques obtenus par frittage d'une telle poudre.

EP 0 409 319 A1

# PROCÉDÉ DE FABRICATION D'UN COMPOSITE D'OXYDES MÉTALLIQUES POUDRES COMPOSITES D'OXYDES MÉTALLIQUES ET MATÉRIAUX CÉRAMIQUES

L'invention a pour objet un procédé permettant de fabriquer des composites d'oxydes métalliques, ainsi que des poudres d'oxydes métalliques obtenues par ce procédé et des matériaux céramiques fabriqués par frittage de telles poudres.

Les matériaux céramiques sont des matériaux inorganiques non métalliques dont la mise en oeuvre requiert des traitements à température élevée, tels que des traitements de fusion ou de frittage (P. William Lee - "Ceramics" - 1961 - Reinhold Publishing Corp. - p. 1; Kirk-Othmer - Encyclopedia of Chemical Technology -Third edition - vol. 5 - 1979 - John Wiley & Sons - USA - p. 236).

Les matériaux céramiques présentent généralement une piètre aptitude à résister à des variations importantes de température, notamment à des chocs thermiques, sans subir une dégradation progressive de leurs propriétés mécaniques.

Pour améliorer les propriétés mécaniques des matériaux céramiques obtenus par frittage, notamment leur résistance aux chocs thermiques, on a songé à y inclure une phase dispersée d'un composé présentant des variétés allotropiques stables différentes selon que l'on se trouve à la température ambiante ou à la température du frittage. L'oxyde de zirconium et l'oxyde d'hafnium sont préconisés pour la phase dispersée, la phase dispersante pouvant par exemple être de l'oxyde d'aluminium (FR-A-2330660). Ces matériaux céramiques sont fabriqués par frittage de poudres composites comprenant au moins deux oxydes métalliques différents, qui sont destinés à former respectivement la phase dispersante et la phase dispersée du matériau céramique.

Divers procédés ont été proposés pour fabriquer de telles poudres composites.

Un premier procédé connu consiste à mélanger mécaniquement une poudre de la matière de la phase dispersante avec une poudre du composé de la phase dispersée (FR-A-2330660). Ce procédé connu implique un mélange intense et long, et il se prête mal à l'obtention de poudres composites de composition homogène.

Selon un autre procédé connu, on prépare un bain par fusion de la matière de la phase dispersante et du composé de la phase dispersée et on soumet le bain à une trempe en le pulvérisant en fines gouttelettes, pour former une poudre (DE-A-3216651). Ce procédé est difficile à mettre en oeuvre; il implique des températures très élevées et il se prête difficilement à la fabrication de matériaux céramiques hautement réfractaires.

On connaît aussi un procédé selon lequel on hydrolyse un alcoolate de zirconium en présence d'une poudre d'alumine, dans des conditions réglées pour précipiter une poudre de zircone sur la poudre d'alumine. Dans ce procédé connu, la poudre d'alumine est dispersée dans un milieu organique liquide contenant l'alcoolate de zirconium dissous et la suspension organique résultante est mélangée à de l'eau dans des conditions réglées pour hydrolyser l'alcoolate de zirconium et précipiter la poudre de zircone (Materials Science Monographs - High Tech Ceramics, Vol.38, parts A-C, 1987, Elsevier Science Publishers B.V., Amsterdam : part B, pages 1345 à 1356). Dans ce procédé connu, il est difficile d'éviter une germination parasite d'oxyde de zirconium au sein du milieu réactionnel, en dehors des grains formant la poudre d'alumine, ce qui nuit à l'homogénéité de la poudre composite d'alumine et de zircone.

L'invention vise à remédier aux inconvénients des procédés connus décrits ci-dessus, en fournissant un procédé nouveau qui permet de fabriquer plus facilement des composites d'oxydes métalliques, notamment des poudres composites, dont l'homogénéité chimique est améliorée par rapport à celle généralement obtenue avec les procédés connus.

En conséquence, l'invention concerne un procédé de fabrication d'un composite d'oxydes métalliques, selon lequel on hydrolyse un alcoolate métallique en présence de particules d'(hydr)oxyde métallique, en réglant l'hydrolyse pour convertir l'alcoolate métallique en un gel d'(hydr)oxyde métallique enveloppant les particules d'(hydr)oxyde métallique.

Dans le procédé selon l'invention, le composite d'oxydes métalliques est un matériau solide formé d'un mélange d'oxydes d'au moins deux métaux différents, le matériau pouvant par exemple se présenter à l'état d'un bloc massif ou d'une poudre de fines particules approximativement sphériques, aciculaires ou tabulaires.

On entend désigner par l'expression (hydr)oxyde métallique, un oxyde métallique, un hydroxyde métallique ou un mélange d'oxyde métallique et d'hydroxyde métallique. L'(hydr)oxyde métallique peut être anhydre ou hydraté et se présenter à l'état amorphe ou cristallisé.

Les particules d'(hydr)oxyde métallique ont généralement un diamètre qui n'excède pas quelques microns, généralement inférieur à 10 microns. Des diamètres recommandés sont ceux n'excédant pas 5 microns, par exemple compris entre 0,05 et 2 microns; les diamètres inférieurs à 1 micron sont préférés.

L'alcoolate métallique est un composé dans lequel un métal est relié par l'intermédiaire d'un atome d'oxygène, à un groupement hydrocarboné tel qu'un groupement aromatique ou un groupement aliphatique linéaire ou cyclique, saturé ou insaturé, non substitué ou substitué partiellement ou totalement. Les alcoolates métalliques à groupements aliphatiques sont spécialement recommandés; ceux à groupements aliphatiques saturés, non substitués sont préférés, tels que, par exemple, les groupements méthyl, éthyl, n-propyl, isopropyl, n-butyl et isobutyl.

L'hydrolyse a pour fonction de convertir l'alcoolate métallique en oxyde ou hydroxyde métallique. Conformément à l'invention, elle est exécutée dans les conditions connues de la technique "Sol-gel", pour provoquer une gélification du milieu réactionnel et éviter une précipitation (Ferroelectrics, 1985, Vol. 62, pages 189 et 190).

L'hydrolyse peut être effectuée dans l'air ambiant. Toutefois, pour éviter une décomposition incontrôlée de l'alcoolate métallique, il est souhaitable que l'hydrolyse soit exécutée sous une atmosphère gazeuse exempte d'humidité. L'air anhydre, l'azote et l'argon sont des exemples d'atmosphères utilisables dans le procédé selon l'invention.

En principe, la température et la pression ne sont pas critiques. En général, dans la majorité des cas, on peut travailler à la température ambiante et la pression atmosphérique normale.

Des particularités et détails complémentaires concernant l'hydrolyse sont exposés dans le document EP-A-0234647 (SOLVAY & Cie).

Le produit recueilli à l'issue de l'hydrolyse est une masse gélifiée d'oxyde ou d'hydroxyde métallique généralement hydraté, enveloppant les particules d'(hydr)oxyde métallique à la manière d'une gangue. Il peut être utilisé tel quel; on préfère le soumettre au préalable à un séchage.

Dans une forme de réalisation préférée du procédé selon l'invention, pour hydrolyser l'alcoolate métallique en présence des particules d'(hydr)oxyde métallique, on disperse celles-ci dans une solution organique de l'alcoolate métallique et on traite la suspension organique résultante avec de l'eau. L'eau est de préférence mise en oeuvre à l'état dissous dans un liquide organique, généralement un alcool.

Dans cette forme de réalisation du procédé selon l'invention, les taux de dilution optimum de l'alcoolate et de l'eau dans leurs solvants respectifs dépendent de divers facteurs, notamment du métal entrant dans la composition de l'alcoolate métallique, de l'alcoolate sélectionné, des solvants utilisés et de la température de travail; ils doivent être déterminés dans chaque cas particulier par un travail de routine au laboratoire. Des particularités et détails complémentaires concernant ce mode d'exécution de l'hydrolyse sont exposés dans le document EP-A-0234647 (SOLVAY & Cie).

Dans une autre forme de réalisation spécialement avantageuse du procédé selon l'invention, les particules d'(hydr)oxyde métallique mises en oeuvre sont obtenues en soumettant un alcoolate métallique à une hydrolyse dans des conditions réglées pour précipiter les particules sans gélification en masse du milieu réactionnel résultant de l'hydrolyse. Des particularités et détails complémentaires concernant ce mode d'exécution de l'hydrolyse sont exposés dans les documents EP-A-0238103, EP-A-0263544 et EP-A-0286155 (SOLVAY & Cie). Cette forme de réalisation du procédé selon l'invention présente l'avantage de fournir un composite dans lequel les particules d'(hydr)oxyde métallique sont homogènes en forme (qui est approximativement sphérique) et en dimensions.

Dans une autre forme de réalisation spécialement avantageuse du procédé selon l'invention, la masse gélifiée recueillie à l'issue de l'hydrolyse est soumise à une fragmentation, par exemple dans un broyeur à attrition, pour la convertir en une poudre. Dans une variante de cette forme de réalisation, la poudre recueillie à l'issue de la fragmentation est soumise à un chauffage dans des conditions réglées pour cristalliser les oxydes métalliques. Dans cette forme de réalisation du procédé selon l'invention et sa variante d'exécution, la fragmentation est de préférence réglée pour que les grains de la poudre produite ait un diamètre moyen supérieur au diamètre des particules d'(hydr)oxyde métallique, le diamètre moyen étant défini par la relation

$$d = \frac{\Sigma n_i d_i}{\Sigma n_i}$$

où $n_i$ désigne la fréquence (nombre ou masse) des grains de diamètre $d_i$.

On règle généralement la fragmentation pour que le diamètre moyen des grains de la poudre soit compris entre 0,1 et 10 microns, par exemple inférieur à 5 microns; les diamètres moyens inférieurs à 2 microns ont la préférence.

La forme de réalisation qui vient d'être décrite et sa variante d'exécution sont spécialement recommandées pour la fabrication de matériaux céramiques par frittage de poudres d'oxydes métalliques.

En conséquence, l'invention concerne également des poudres composites d'oxydes métalliques obtenues au moyen du procédé selon l'invention, ainsi que des matériaux céramiques obtenus par frittage de telles poudres. L'invention concerne spécialement des poudres composites d'au moins deux oxydes métalliques différents, dont l'un existe sous deux variétés allotropiques différentes et présente une température de transformation allotropique naturelle située entre la température de frittage de la poudre et la température ambiante. L'invention concerne notamment des poudres comprenant des cristaux d'oxyde de zirconium non stabilisé et des cristaux d'oxyde d'aluminium et/ou de silicium (par exemple des cristaux de mullite, de cordiérite ou de sialon), ainsi que des matériaux céramiques obtenus par frittage de telles poudres. Dans ces poudres composites et ces matériaux céramiques conformes à l'invention, les cristaux d'oxyde de zirconium non stabilisé sont des cristaux susceptibles de subir des transformations allotropiques L'oxyde de zirconium à l'état pur présente en effet la particularité d'exister sous trois formes allotropiques différentes en fonction de la température, à savoir :

- la forme monoclinique, jusqu'à environ 1100°C,
- la forme tétragonale ou quadratique, entre 1100 et 2200°C, et
- la forme cubique, au-dessus de 2200°C.

Les transformations allotropiques de l'oxyde de zirconium s'accompagnent de variations de volume importantes, et on sait que l'on peut stabiliser la forme tétragonale ou la forme cubique à basse température en incorporant dans son réseau cristallin des oxydes d'autres métaux convenablement choisis, notamment des oxydes de métaux des terres rares ou de l'oxyde du mischmétal (US-A-3634113; US-A-3860529).

Dans le cadre de l'invention, l'expression "oxyde de zirconium non stabilisé" désigne de l'oxyde de zirconium à l'état cristallisé, dont la forme cubique ou tétragonale n'a pas été stabilisée à basse température de la manière exposée ci-avant, ou n'a été que partiellement stabilisée.

Des exemples de poudres composites conformes à l'invention comprennent entre 5 et 50 % en volume d'(hydr)oxyde de zirconium, de préférence entre 10 et 25 %.

Les composites selon l'invention sont formés d'une phase dispersante d'oxyde métallique, contenant une phase dispersée de particules d'(hydr)oxyde métallique. L'invention permet d'obtenir un réglage précis de la composition pondérale de ces composites. Elle présente l'avantage supplémentaire de fournir des composites dans lesquels la taille des particules dispersées d'(hydr)oxyde métallique peut être réglée avec grande précision, celles-ci se trouvant dispersées de manière homogène dans le composite.

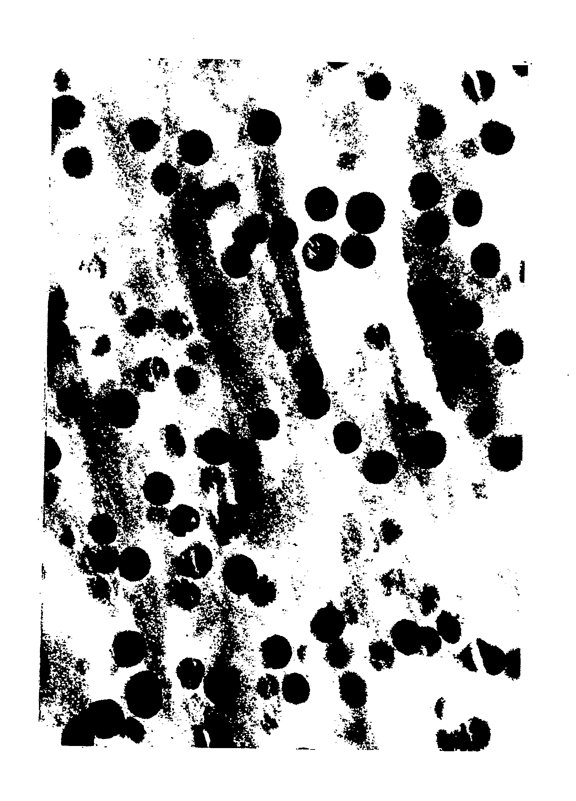

L'exemple suivant sert à illustrer l'invention, en référence au dessin annexé qui est une reproduction photographique d'un composite conforme à l'invention, au grossissement 20 000 X.

L'exemple a trait à la préparation d'un matériau composite précurseur d'un mélange de mullite et d'oxyde de zirconium, conforme à l'invention, en référence à la figure unique du dessin annexé, qui est une reproduction photographique de ce matériau composite précurseur.

Dans une chambre de réaction maintenue sous atmosphère d'azote anhydre à une température de 25°C, on a introduit 100 ml d'une solution 0,2 molaire de n-butoxyde de zirconium dans de l'éthanol et 1,5 ml d'acide oléique. Après homogénéisation du mélange, on a soumis celui-ci à une agitation intense et on y a ajouté en une fois 100 ml d'une solution 1,25 molaire d'eau dans de l'éthanol, puis on a fait subir au mélange réactionnel un mûrissage de 2 heures. On a opéré à cet effet comme exposé dans les documents EP-A-0238103, EP-A-0286155 et GB-A-2168334. A l'issue du mûrissage, on a soumis le mélange réactionnel à une centrifugation et on a recueilli une poudre que l'on a lavée avec de l'alcool anhydre, puis séchée au moyen d'un courant d'air anhydre à la température ambiante. La poudre s'est révélée être constituée de particules sensiblement sphériques de diamètre moyen égal à 0,24 micron, formées d'un mélange complexe d'oxyde et d'hydroxyde de zirconium hydraté amorphe et de résidus organiques.

Les particules d'(hydr)oxyde de zirconium ont été redispersées dans de l'éthanol et, après homogénéisation, la suspension résultante a été introduite dans une enceinte maintenue sous atmosphère d'azote anhydre à une température de 25°C. On avait auparavant introduit dans l'enceinte 75 ml d'une solution de butoxyde d'aluminium, de tétraéthylorthosilicate et d'eau dans du méthoxy-2-éthanol-1 (de concentrations équivalentes à 1 mole d'aluminium, 0,33 mole de silicium et 1,5 mole d'eau pour 1 l de solution). La suspension de particules d'(hydr)oxyde de zirconium a été introduite dans l'enceinte en une quantité correspondant à 0,3 mole de zirconium par mole d'aluminium. Après homogénéisation du mélange, on y a ajouté 35 ml d'une solution d'eau dans du méthoxy-2-éthanol-1 (40% en volume). On a laissé le mélange réactionnel se figer par formation d'un gel, ce qui a nécessité environ 45 minutes. On a recueilli le gel et on l'a séché dans un courant d'air sec à 120°C, ce qui a provoqué sa fragmentation. On a ensuite broyé le gel, puis on l'a soumis à un chauffage à l'air à 500°C, pendant quatre heures.

La figure montre le gel avant le chauffage à 500°C.

**Revendications**

1 - Procédé de fabrication d'un composite d'oxydes métalliques, selon lequel on hydrolyse un alcoolate métallique en présence de particules d'-

(hydr)oxyde métallique, caractérisé en ce qu'on règle l'hydrolyse pour convertir l'alcoolate métallique en un gel d'(hydr)oxyde métallique enveloppant les particules d'(hydr)oxyde métallique.

2 - Procédé selon la revendication 1, caractérisé en ce que, pour hydrolyser l'alcoolate métallique en présence des particules d'(hydr)oxyde métallique, on disperse les particules d'(hydr)oxyde métallique dans une solution organique de l'alcoolate métallique et on traite la suspension organique résultante avec de l'eau.

3 - Procédé selon la revendication 1 ou 2, caractérisé en ce qu'on fragmente le gel pour le convertir en une poudre, et on chauffe la poudre dans des conditions réglées pour cristalliser les oxydes métalliques.

4 - Procédé selon l'une quelconque des revendications 1 a 3, caractérisé en ce qu'on met en oeuvre des particules d'(hydr)oxyde métallique obtenues en soumettant un alcoolate métallique à une hydrolyse dans des conditions réglées pour précipiter les particules sans gélification en masse du milieu réactionnel résultant de l'hydrolyse.

5 - Procédé selon l'une quelconque des revendications 1 à 4, caractérisé en ce qu'on met en oeuvre des particules d'(hydr)oxyde métallique de diamètre compris entre 0,05 et 2 microns.

6 - Procédé selon l'une quelconque des revendications 1 à 5, caractérisé en ce qu'on met en oeuvre des particules d'(hydr)oxyde de zirconium et un alcoolate d'au moins un métal sélectionné parmi l'aluminium et le silicium.

7 - Poudres composites d'oxydes métalliques, obtenues par un procédé conforme à l'une quelconque des revendications 3 à 6.

8 - Poudres composites selon la revendication 7, comprenant des cristaux d'oxyde de zirconium non stabilisé et des cristaux d'oxyde d'aluminium, de mullite, de cordiérite ou de sialon.

9 - Poudres composites selon la revendication 8, caractérisées en ce qu'elles contiennent entre 5 et 50 % en volume d'oxyde de zirconium.

10- Matériaux céramiques obtenus par frittage d'une poudre conforme à l'une quelconque des revendications 7 à 9.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | JOURNAL OF THE AMERICAN CERAMIC SOCIETY, vol. 68, no. 2, février 1985, pages C-60 - C-62; B. FEGLEY, Jr. et al.: "Preparation of zirconia-alumina powders by zirconium alkoxide hydrolysis" <br> * Page C-60, résumé et paragraphes 2,3; page C-61, lignes 1-9 * | 1,2,5,7,8 | C 01 B 13/32 <br> C 01 G 25/02 <br> C 04 B 35/48 |
| A | GB-A-2 204 030 (TIOXIDE GROUP) <br> * Page 6, lignes 14-26; page 7, lignes 12-17 * | 1,6 | |
| X | MATERIALS RESEARCH SOCIETY SYMPOSIA PROCEEDINGS, vol. 32, pages 187-196; B. FEGLEY, Jr. et al.: "Synthesis, characterization, and processing of monosized ceramic powders" <br> * Page 190, paragraphe 2 * | 1,2,5 | |
| A | JOURNAL OF THE AMERICAN CERAMIC SOCIETY, vol. 69, no. 3, 1986, pages 268-269; Q.-M. YUAN et al.: "Processing and microstructure of mullite-zirconia composites prepared from sol-gel powders" <br> * Page 268, résumé et paragraphe II * | 1-10 | |
| A | PATENT ABSTRACTS OF JAPAN, vol. 12, no. 56 (C-477)[2903], 29 février 1988; <br> & JP-A-62 202 813 (CHICHIBU CEMENT) 07-09-1987 | | DOMAINES TECHNIQUES RECHERCHES (Int. Cl.5) <br><br> C 01 B <br> C 01 G <br> C 04 B |
| A | EP-A-0 234 816 (CATALYSTS AND CHEMICALS) <br> * Page 20, lignes 1-24 * | 1-5 | |

Le présent rapport de recherche a été établi pour toutes les revendications

| Lieu de la recherche | Date d'achèvement de la recherche | Examinateur |
|---|---|---|
| La Haye | 28 octobre 90 | LIBBERECHT-VERBEECK |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant